# FASCICULE DE BREVET EUROPEEN

(11) **EP 1 618 076 B1**
(45) Date de publication et mention de la délivrance du brevet: **11.05.2011**
(21) Numéro de dépôt: 04724334.0
(22) Date de dépôt: 30.03.2004
(51) Int. Cl.: C04B 24/00, C04B 28/02, C23F 11/167, C09D 5/08, C23C 22/05

(54) **PRODUIT POUR LE TRAITEMENT DE STRUCTURES EN BETON ARME**
BEHANDLUNGSMITTEL FÜR BEWEHRTE BETONSTRUKTUREN
PRODUCT FOR TREATING REINFORCED CONCRETE CONSTRUCTIONS

(30) Priorité: 09.04.2003 CH 640032003
(43) Date de publication de la demande: 25.01.2006
(73) Titulaire: Arts Technology S.A., 1242 Satigny (CH)
(72) Inventeur: LUTZ, Theophil, Markus, CH-1110 Morges (CH); CHEVRET, Christian, F-74380 Cranves Sales (FR)
(74) Mandataire: Bugnion Genève
(86) Numéro de dépôt international: PCT/IB2004/001123
(87) Numéro de publication internationale: WO 2004/089844

(56) Documents cités:
- WO-A-01/55052
- WO-A-02/24973
- WO-A-93/12052
- US-A- 4 098 614
- MONTICELLI, C. ET AL: "A study on corrosion inhibitors for concrete application" CEMENT AND CONCRETE RESEARCH , 30(4), 635-642 , ISSN: 0008-8846, 2000, XP002260698 cité dans la demande
- KAWAMURA MITSUNORI ET AL: "Effects of lithium salts on ASR gel composition and expansion of mortars" CEM CONCR RES; CEMENT AND CONCRETE RESEARCH JUNE 2003, vol. 33, no. 6, juin 2003 (2003-06), pages 913-919, XP002260699

## Description

La présente invention concerne le domaine de la construction. Elle concerne en particulier le traitement de structures réalisées en produit à base de ciment et présentant des armatures en acier, permettant d'inhiber la corrosion des armatures, de prévenir l'alcali réaction et d'éviter la présente d'alcalis et de sulfates dans la structure.

Les armatures en acier des structures réalisées en béton sont sujettes à la corrosion. Le béton peut quant à lui subir une dégradation par éclatement dû à un gonflement suite aux alcali réactions et à la présence de sulfates ou d'alcalis. Cet éclatement engendre des fissures qui permettent la pénétration de l'eau dans la structure et favorise ainsi la corrosion des armatures. Ce phénomène se perpétue jusqu'à la destruction complète du béton.

La corrosion des armatures est favorisée par des éléments contaminants, tels que les chlorures présents en particulier dans le sable d'origine marine utilisé depuis la pénurie de sable de rivière ou apportés par les sels de déverglaçage des -chaussées. Ces contaminants peuvent encore être trouvés dans des agrégats de carrière ou de recyclage de démolition souillés ou dans produits utilisés naguère comme adjuvant au béton. (chlorures ou sulfates)

La carbonatation du béton diminue le pH des structures bétonnées. Les armatures, entourées de béton, ne sont alors plus protégées par son pH élevé et deviennent sensibles à la corrosion. La fissuration du béton due aux réactions décrites précédemment favorise la pénétration de l'eau dans la structure et par conséquent la corrosion des armatures.

Il est connu du document « A study on corrosion inhibitors for concrete applications » de C. Monticelli et al., d'utiliser du glycérophosphate de sodium pour traiter des structures bétonnées et protéger leurs armatures contre la corrosion.

Il est, d'autre part, connu de la demande WO 93/12052 d'utiliser des composés au lithium pour inhiber les alcali réactions dans des structures bétonnées.

Le brevet US 4,098,614 divulgue l'utilisation de glycérophosphates, en particulier de lithium, pour améliorer la résistance à la compression des structures bétonnées.

La demande de brevet WO 02/24973 divulgue l'utilisation de glycérophosphates pour prévenir la corrosion de métaux.

La demande de brevet WO 01/55052 divulgue l'utilisation du monofluorophosphate de sodium pour inhiber la corrosion des armatures en acier d'une structure bétonnée.

L'invention a pour but de traiter de manière préventive ou curative des structures contre ces phénomènes. L'invention propose en particulier d'inhiber la corrosion des armatures en acier corrodées ou non encore corrodées, de renforcer le mélange cimentaire en prévenant l'alcali réaction et en évitant la présence d'alcalis et de sulfates dans les structures.

Ces buts sont atteints par l'utilisation du glycérophosphate de lithium pour le traitement de structures réalisées en produit à base de ciment et présentant des armatures en acier.

Différents modes d'exécution de procédés de traitement de structure sont définis par les revendications 2 à 12.

Une structure selon l'invention est définie par la revendication 13.

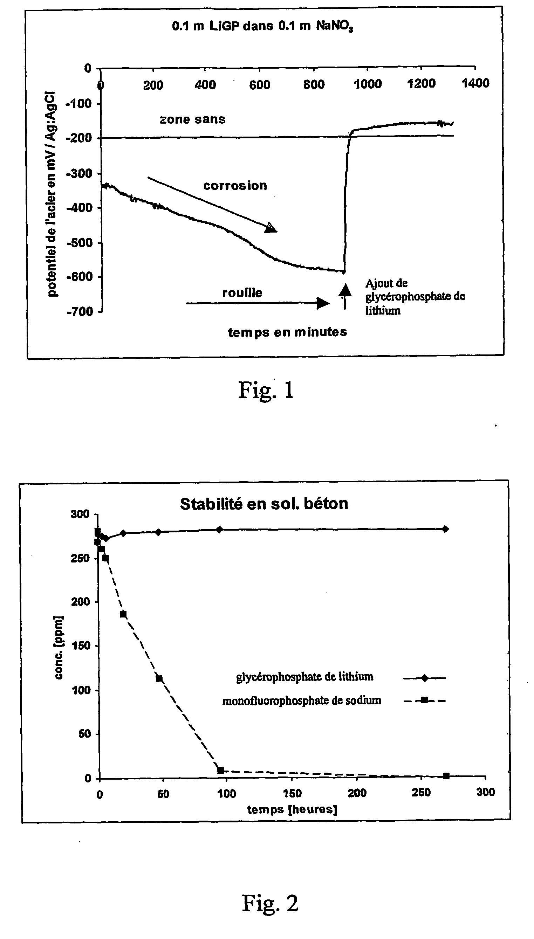

Les figures 1 à 9 présentent des résultats d'essais prouvant l'efficacité du glycérophosphate de lithium pour le traitement de structures réalisées en produit à base de ciment et présentant des armatures en acier.

Il a été trouvé que le glycérophosphate de lithium a, en plus d'un rôle d'inhibiteur de corrosion des aciers emprisonnés dans des produits à base de ciment tels que le béton et le mortier, la faculté de protéger le béton d'une dégradation due aux alcali réactions et possède un pouvoir de pénétration du béton largement supérieur à celui des inhibiteurs connus.

La capacité d'un glycérophosphate de lithium à inhiber la corrosion sur de l'acier déjà corrodé ou non peut être observée en imprégnant d'une composition de glycérophosphate de lithium une structure réalisée en un produit à base de ciment contenant l'acier. La capacité du glycérophosphate de lithium à prévenir les alcali réactions peut être observée simultanément.

Le traitement d'une structure bétonnée qui a subi par exemple une dégradation due aux sulfates et une corrosion des aciers exposés de ce fait ou dans un béton fissuré jusqu'à ses armatures, est décrit ci-après.

Du fait de l'alcali réaction, les armatures sont sujettes à la corrosion. Selon l'invention, on utilise pour traiter de telles structures une solution aqueuse de glycérophosphate de lithium contenant 0.1 à 0.5% en masse de glycérophosphate de lithium. On applique cette solution aqueuse directement sur la structure par exemple au pinceau, au rouleau ou encore par pulvérisation grâce à un pulvérisateur basse pression. Cette solution imprègne rapidement la structure du fait de la porosité du béton et de la faculté du glycérophosphate à pénétrer le béton. L'application se fait en une seule couche ou en plusieurs couches permettant de répandre sur la surface de la structure entre 1 et 2 grammes de glycérophosphate de lithium par m² de béton à traiter.

Cette application a pour but d'obtenir, dans une zone s'enfonçant dans le béton d'environ 50 mm depuis la surface où est répandue la solution, une concentration en glycérophosphate de lithium dans le béton comprise entre 0.001% et 0.5% en masse. Les armatures dont il faut inhiber la corrosion et le béton dont il faut prévenir les alcali réactions se trouvent dans cette zone. On imprègne de préférence 1.2 grammes de glycérophosphate de lithium par m² de béton à traiter afin de réaliser une concentration en glycérophosphate de lithium dans le béton de 0.01% en masse. On peut appliquer d'autres quantités de glycérophosphate sur la structure. La quantité à imprégner par unité -de surface de structure à traiter dépend en particulier de la localisation des armatures à traiter par rapport à la surface d'application de la porosité du béton et de la concentration des contaminants. On comprend que si le béton est peu poreux ou si les armatures sont situées relativement loin de la surface d'application du produit ou si le béton est très contaminé, il est nécessaire d'augmenter la quantité de glycérophosphate de lithium de manière à obtenir au voisinage des armatures une concentration en glycérophosphate de lithium suffisante pour inhiber la corrosion sur l'acier et éviter les alcali réactions. Des tests qui seront détaillés plus loin dans la présente demande montrent qu'à partir d'une concentration massique de 0.001% de glycérophosphate de lithium dans le béton on obtient déjà un effet inhibiteur de corrosion très important et une stabilisation des alcalis et des sulfates. Cependant, une concentration massique de 0.01% de glycérophosphate dans le béton est préférée compte tenu de la grande hétérogénéité des bétons dans une même structure.

Le traitement précédent peut aussi être appliqué, à titre préventif, à une structure n'ayant pas subi ni de carbonatation, ni d'alcali réaction, ni d'autre contamination. On peut en particulier l'appliquer de manière préventive sur des structures saines dont les armatures n'ont pas été corrodées et/ou qui ne révèlent pas encore de fissuration visible.

La solution de glycérophosphate de lithium utilisée peut comprendre d'autres composants ayant également une fonction d'inhibition de la corrosion ou des fonctions différentes. On peut en particulier utiliser une solution comprenant des composants qui en plus d'inhiber la corrosion, de renforcer les structures et d'empêcher les alcali réactions et la présence de sulfates, permettent de colorer ou de pigmenter la solution pour des raisons décoratives. De plus, le glycérophosphate de lithium peut être incorporé à des peintures, par exemple des peintures à base d'eau destinées à être appliquées sur des structures constituées de produit à base de ciment.

Pour permettre l'inhibition de la corrosion sur de l'acier constituant des armatures exposées à l'air libre, on se propose d'utiliser une peinture ou barbotine à base de ciment à laquelle on a ajouté un du glycérophosphate de lithium. Cette peinture ou barbotine est appliquée sur les armatures en acier par exemple à l'aide d'un pinceau, d'un rouleau, d'un pistolet à peinture ou d'un pistolet de pulvérisation sans air.

La capacité du glycérophosphate de lithium à inhiber la corrosion sur de l'acier peut encore être observée lorsqu'on l'incorpore à une pâte à base de ciment destinée à emprisonner l'acier après solidification et en présence de contaminants.

Pour permettre l'inhibition de la corrosion sur de l'acier qui sera contenu dans une structure réalisée en un produit à base de ciment, on se propose d'utiliser du glycérophosphate de lithium seul ou en combinaison avec du glycérophosphate de calcium ou d'autres glycérophosphates.

Nous allons détailler le procédé permettant la réalisation d'une pâte de produit à base de ciment permettant de protéger les armatures qui y seront disposées et où un risque de dégradation existe du fait de la présence de contaminant tels que des sulfates, des alcalis et des chlorures. On prépare un béton à partir d'un ciment par exemple de type Portland, de sable, d'agrégats par exemple de taille inférieure à 15mm et d'eau. On mélange ces produits jusqu'à obtenir une pâte homogène. On ajoute alors une solution aqueuse à 1% de glycérophosphate de lithium. On continue ensuite à mélanger ces produits jusqu'à obtenir un produit homogène. La quantité de solution ajoutée est telle que la concentrations massique en glycérophosphate dans la pâte est comprise entre 0.001% et 0.5%. De préférence, la quantité de solution ajoutée est telle que la concentration massique en glycérophosphate dans la pâte est de 0.01%. La pâte de béton ainsi préparée peut ensuite être coulée en ayant au préalable mis en place les armatures en acier destinées à rigidifier la structure. Les armatures peuvent en particulier consister en des câbles de précontrainte très vulnérables aux alcalis.

Dans les deux procédés décrits précédemment, on utilise comme inhibiteur de corrosion et agent de protection et de renforcement contre la fissuration due aux sulfates et aux alcalis le glycérophosphate de lithium. Ce composé possède en effet une caractéristique intéressante : il est non toxique et est, par exemple, utilisé dans l'industrie pharmaceutique pour ses bienfaits sur le corps humain.

Nous allons maintenant détailler une série d'essais effectués en laboratoire et sur ouvrage. Ces essais permettent de mettre en évidence l'intérêt à utiliser le glycérophosphate de lithium pour traiter les structures.

### Essai 1 :

On utilise pour cet essai un barreau d'acier suisse type S500. On plonge ce barreau dans une solution à 0.1 mol/L de nitrate de sodium et on le laisse se corroder jusqu'à que de la rouille apparaisse à sa surface. Dès l'introduction du barreau dans la solution, on mesure le potentiel électrique de l'acier en utilisant comme référence une électrode d'argent plongée dans une solution de chlorure d'argent. La corrosion de l'acier provoque la décroissance de son potentiel électrique. Après apparition de la rouille, on ajoute du glycérophosphate de lithium dans la solution jusqu'à obtenir une concentration de 0.1 mol/L en glycérophosphate de lithium. On observe alors une croissance du potentiel électrique de l'acier jusqu'aux environs de -160mV, ce qui signifie que l'acier est devenu insensible à la corrosion. En effet, il est connu que les aciers dont le potentiel électrique est supérieur à -200mV sont insensibles à la corrosion. La figure 1 présente la courbe temporelle de mesure du potentiel électrique de l'acier constituant le barreau.

### Essai 2 :

On compare lors de cet essai les concentrations nécessaires en différents produits permettant un effet inhibiteur de corrosion. Les produits étudiés sont le glycérophosphate de lithium et d'autres produits utilisés dans l'art antérieur comme inhibiteurs de corrosion. Pour chaque produit, on prépare quatre solutions ayant des concentrations différentes 0.001, 0.01, 0.1, et 1 mol/L. Après avoir plongé des échantillons d'acier doux dans chacune des solutions précédentes pendant 28 jours, on observe à l'oeil nu si les échantillons d'acier présentent ou non des traces de corrosion. On consigné dans le tableau 1 suivant, pour chaque produit, la concentration minimale permettant à l'acier de ne pas présenter de trace de corrosion.

**Tableau 1**

| Produit | Concentration (mol/L) |
|---|---|
| glycérophosphate de lithium | 0.001 |
| monofluorophosphate de sodium | 1.000 |
| diéthanolamine | 0.100 |
| triéthanolamine | 0.100 |
| diéthanolamine-phosphate | 0.010 |
| triéthanolamine-phosphate | 0.010 |
| triéthanolamine-borate | 0.100 |

Il ressort de cet essai qu'une très faible concentration (0.001 mol/L) de glycérophosphate de lithium est suffisante pour inhiber la corrosion sur l'acier.

### Essai 3 :

Cet essai permet de mettre en évidence la stabilité du glycérophosphate de lithium dans une solution contenant 1% de poudre de béton et 0.2% de chaux vive. On compare au cours de cet essai la stabilité du glycérophosphate de lithium à celle du monofluorophosphate de sodium. La figure 2 présente la courbe temporelle des concentrations de ces eux produits. La concentration en glycérophosphate de lithium reste quasiment stable et celle en monofluorophosphate décroît de manière très sensible au cours du temps.

### Essai 4 :

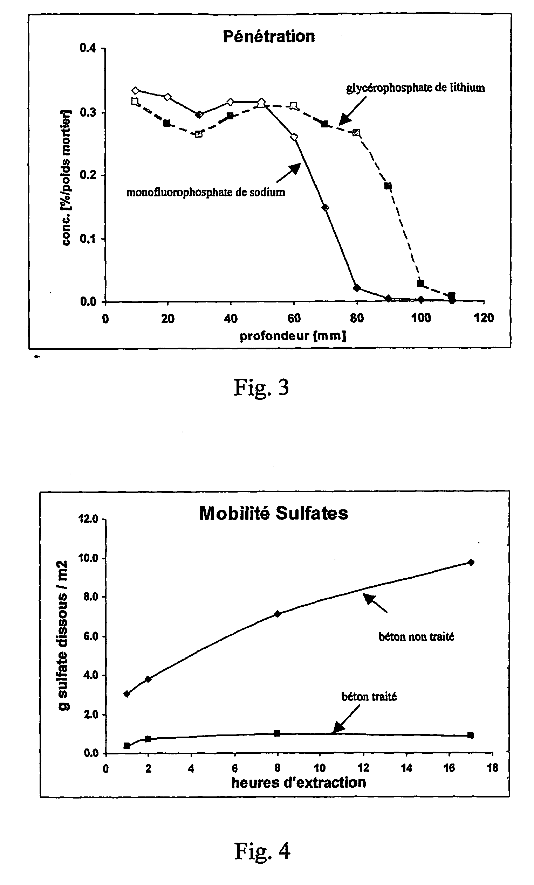

Cet essai permet de mettre en évidence la capacité du glycérophosphate de lithium à pénétrer une structure bétonnée. On compare en particulier au cours de cet essai le pouvoir de pénétration du glycérophosphate de lithium et celui du monofluorophosphate de sodium. On utilise, pour réaliser cet essai, des plaques de mortier fabriquées en laboratoire. On mesure la concentration en glycérophosphate de lithium en fonction de la profondeur par dosage par chromatographie ionique. La figure 3 représente la concentration des produits dans les plaques en fonction de la profondeur. Les résultats mettent en évidence le bon pouvoir de pénétration du glycérophosphate de lithium.

### Essai 5 :

Cet essai permet de mettre en évidence la capacité de l'élément lithium à réduire significativement la mobilité des sulfates. Un échantillon d'un béton contaminé par un excès de sulfates a été traité avec du glycérophosphate de lithium et un autre non. Après séchage, les échantillons ont été placés sur du papier buvard contenant de l'eau distillée. Les concentrations en sulfates dans les buvards après différents temps d'extraction ont été mesurées et reportées sur le graphique de la figure 4. Les résultats mettent en évidence la capacité du lithium à réduire la mobilité des sulfates dans le béton.

### Essai 6 :

Effets du glycérophosphate de lithium sur l'environnement, phytotoxicité.

Des graines de soja ont été placées dans un environnement présentant 0.2 % de glycérophosphate de lithium. Cette concentration de glycérophosphate de lithium n'entraîne pas de ralentissement, ni d'accélération notables de l'étape de germination du soja, une phase cruciale de son développement.

Selon la norme OCDE 302B, le glycérophosphate de lithium est 100% biodégradable.

### Essai 7 :

Effets du glycérophosphate de lithium sur les matériaux de construction.

### Conditions de test.

Des échantillons de matériaux de construction ont été nettoyés avec de l'alcool. 500 µl d'une solution de glycérophosphate de lithium à 2% en masse (une goutte) ont été pipeté sur la surface des différentes échantillons. Après une évaporation lente (3 à 4 heures) et 24 heures de réaction, le reste de solution a été enlevé par un simple rinçage à l'eau.

Tous les matériaux suivants se sont montrés inerties. Ils n'ont pas réagi avec la solution. Aucune trace visible n'est notée après le rinçage.

Tôle de fer zingué, Calvaire beigne du Jura, Fer blanc (étain), Grès siliceux, Cuivre, Grès calvaire (Savonnière), Aluminium, Granit noir (Zimbabwe), Verre, Marbre (Carrera), PVC, Faïence (Carrelage), Bois brut non verni (hêtre).

Seule exception: La couleur du cuivre oxydé est modifiée du fait d'un effet de nettoyage par la solution. Ce phénomène n'est pas observé avec du zinc oxydé.

### Essai 8 :

Effets du glycérophosphate de lithium sur la résistance à la compression du béton.

Cet essai mesure l'influence de l'ajout d'une solution concentrée de glycérophosphate de lithium sur la résistance à la compression de cubes de béton 7 jours et 28 jours après réalisation.

### description de l'essai:

On réalise plusieurs éprouvettes de béton ayant des formes cubiques (20cm x 20cm x 20 cm) avec du béton du commerce. On ajoute volontairement lors de la fabrication un excédent d'eau que l'on sait nuisible à la résistance à la compression des éprouvettes.

Cinq séries d'éprouvettes sont fabriquées selon les mêmes dosages en eau. Une première série ne contient pas de glycérophosphate de lithium, une deuxième série contient 0,02% de glycérophosphate de lithium (par rapport à la masse de ciment), une troisième série contient 0,05% de glycérophosphate de lithium (par rapport à la masse de ciment), une quatrième série contient 0,13% de glycérophosphate de lithium (par rapport à la masse de ciment) et la cinquième série contient 0,24% de glycérophosphate de lithium (par rapport à la masse de ciment).

Après mûrissement et conservation de 7 jours et de 28 jours, les résistances à la compression des différentes éprouvettes sont testées sur une presse et on mesure leur charge de rupture.

### Constatations:

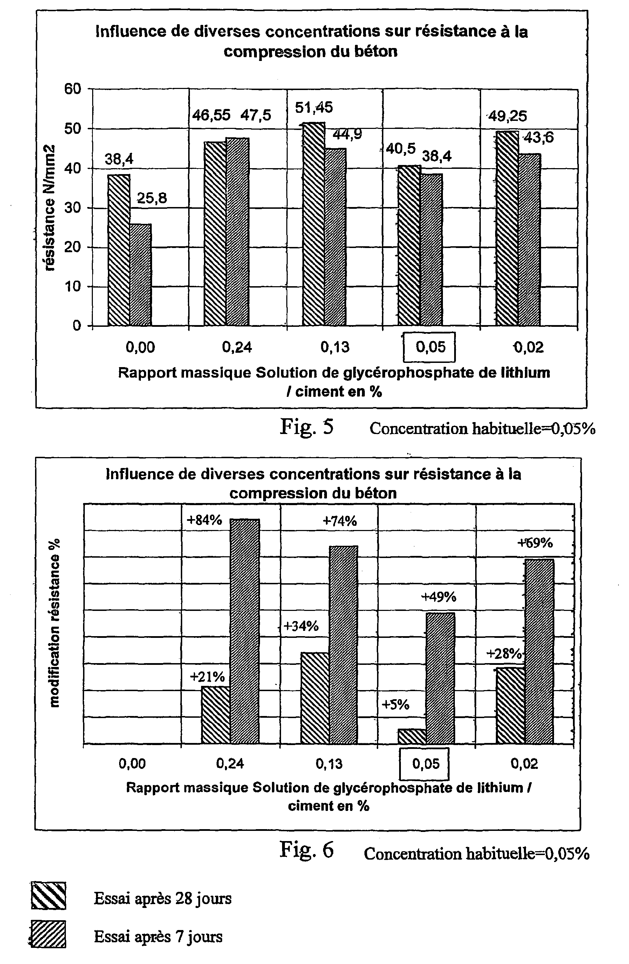

On constate (voir résultats figure 5 et figure 6) que l'ajout de glycérophosphate de lithium n'affecte pas la résistance à la compression des éprouvettes et cela quelle que soit la concentration de glycérophosphate de lithium. On en déduit que le glycérophosphate de lithium peut être utilisé pour traiter des ouvrages bétonnés sans craindre que celui-ci affecte sa résistance.

On remarque de plus que l'ajout de glycérophosphate de lithium augmente fortement la résistance à la compression des éprouvettes après 7 jours et légèrement après 28 jours. Le graphique de la figure 6 présente les augmentations de résistance des différentes éprouvettes traitées par rapport aux éprouvettes ne comprenant pas de glycérophosphate de lithium.

Cette forte augmentation de la résistance représente un avantage certain pour la réalisation d'ouvrages bétonnés. En effet, du fait de cette résistance améliorée 7 jours après réalisation, les phases de bétonnage successives peuvent être rapprochées dans le temps. Ainsi, les réalisations d'ouvrages peuvent être plus rapides et plus aisément planifiées.

### Essai 9 :

Influence du glycérophosphate de lithium sur la mobilité des sels et sur la capillarité du béton et effet sur des aciers d'armatures de ce béton.

Trois éprouvettes en béton sont réalisées selon la même méthode que celle utilisée dans l'essai précédent. Des armatures en acier sont disposées dans ces éprouvettes lors de leur réalisation. Les dimensions des éprouvettes sont les suivantes : hauteur 20 cm pour la première éprouvette et 15 cm pour les deuxième et troisième éprouvettes, longueur 20 cm et profondeur 9 cm.

Les armatures sont disposées dans le sens de la hauteur et dépassent du haut des éprouvettes.

La première éprouvette ne contient pas de glycérophosphate de lithium.

Les deuxième et troisième éprouvettes contiennent respectivement 0,24 % de glycérophosphate de lithium (par rapport à la masse de ciment) et 0,13 % de glycérophosphate de lithium (par rapport à la masse de ciment), le glycérophosphate de lithium ayant été ajouté à la pâte de ciment avant réalisation des éprouvettes.

Après mûrissement des éprouvettes pendant 17 jours, celles-ci sont immergées dans une solution dosée à 3% de chlorure de sodium jusqu'à la moitié de leur hauteur.

Pendant 90 jours, on alterne 6 phases d'immersion des éprouvettes dans la solution et 5 phases de séchage des éprouvettes.

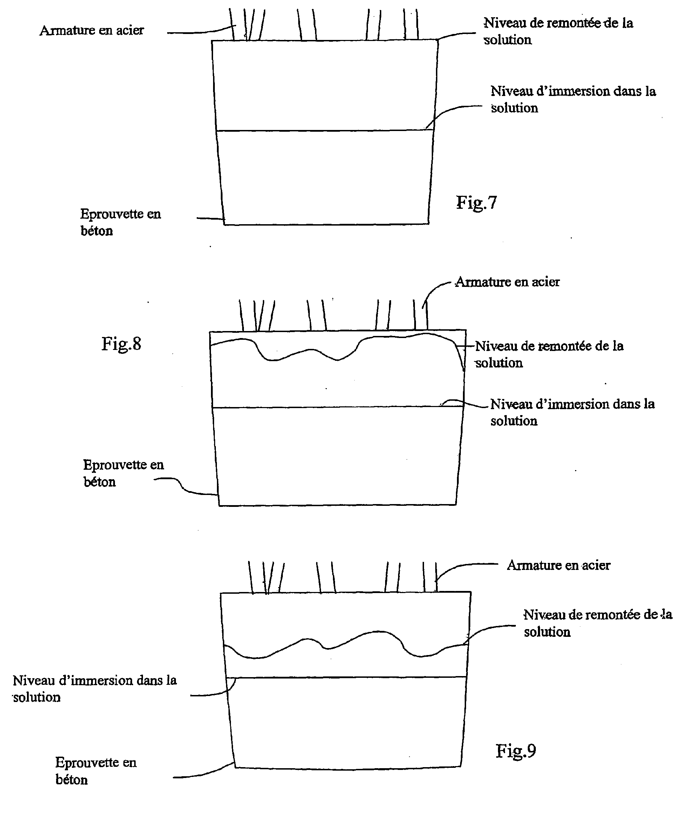

Les figures 7, 8 et 9 représentent les niveaux de remontée capillaire dans les éprouvettes.

Comme indiqué sur la figure 7, à l'issue de la dernière phase d'immersion ayant duré trois jours, on remarque que la solution est montée par capillarité jusqu'en haut de l'éprouvette. De plus, les armatures en acier présentent des débuts de corrosion au niveau de la surface supérieure de l'éprouvette, cette corrosion est due aux sels déplacés par la remontée capillaire de la solution.

Comme indiqué sur les figures 8 et 9, à l'issue de la dernière phase d'immersion ayant duré trois jours, on remarque que la solution n'est pas remontée jusqu'en haut des éprouvettes. De plus, les armatures en acier ne présentent aucun début de corrosion.

Cet essai montre que la présence de glycérophosphate de lithium dans le béton a diminué la mobilité des ions comme cela est également décrit dans l'essai 5.

Cet essai montre également le pouvoir du glycérophosphate à diminuer la pénétration de l'eau dans le béton et, de ce fait, à réduire la quantité de contaminants transportés.

## Revendications

1. Utilisation du glycérophosphate de lithium dans un traitement de structures comprenant un produit à base de ciment et des armatures en acier, en tant qu'agent permettant d'inhiber la corrosion des armatures et la dégradation du produit due aux alcali réactions et à la présence d'alcalis et de sulfates.

2. Procédé de traitement d'une structure à base de ciment présentant des armatures en acier, permettant d'inhiber la corrosion des armatures et la dégradation due aux alcali réactions et à la présence d'alcalis et de sulfates dans la structure, **caractérisé en ce qu'**il comprend l'étape suivante :
- apporter sur la structure ou dans la structure une composition comprenant du glycérophosphate de lithium.

3. Procédé de traitement selon la revendication 2 et destiné au traitement d'une structure réalisée en produit à base de ciment, **caractérisé en ce qu'**il comprend l'étape suivante :
- imprégner la structure d'une composition comprenant du glycérophosphate de lithium.

4. Procédé selon la revendication 3, **caractérisé en ce que** la composition est une solution aqueuse.

5. Procédé selon l'une des revendications 3 à 4, **caractérisé en ce que** l'imprégnation de la structure par la composition se fait par application à sa surface.

6. Procédé selon l'une des revendications 3 à 5, **caractérisé en ce que** la quantité de glycérophosphate de lithium appliquée est de 0.003 à 3 mol/m².

7. Procédé selon l'une des revendications 3 à 6, **caractérisé en ce que** la composition est appliquée au pinceau, au rouleau ou au pulvérisateur.

8. Procédé de traitement selon la revendication 2 et destiné à inhiber la corrosion sur des armatures en acier d'une structure étant exposées à l'air libre, **caractérisé en ce qu'**il comprend l'étape suivante :
- recouvrir les armatures d'une peinture comprenant du glycérophosphate de lithium.

9. Procédé selon la revendication 8, **caractérisé en ce que** la peinture est une peinture à base aqueuse.

10. Procédé de traitement selon la revendication 2 et destiné à traiter une pâte à base de ciment destinée à emprisonner des armatures en acier pour constituer une structure, **caractérisé en ce qu'**il comprend l'étape suivante :
- incorporer à la pâte de produit à base de ciment non encore solidifiée, une composition comprenant du glycérophosphate de lithium.

11. Procédé selon la revendication 10, **caractérisé en ce qu'**on incorpore entre 0.001% et 1% de glycérophosphate de lithium dans la pâte.

12. Procédé selon l'une des revendications 10 ou 11, **caractérisé en ce que** la composition est une solution aqueuse.

13. Structure à base de ciment présentant des armatures en acier, obtenue par le procédé selon l'une des revendications 2 à 12.

## Claims

1. Use of lithium glycerophosphate in a treatment of structures including a cement based product and steel reinforcements, as an agent for inhibiting the corrosion of the reinforcements and the degradation of the product caused by alkali reactions and by the presence of alkali and sulfates.

2. Process for the treatment of a cement based structure including steel reinforcements, allowing the inhibition of corrosion of the reinforcements and the degradation caused by alkali reactions and by the presence of alkali and sulfates in the structure, **characterised in that** it includes the following step:
- applying a composition containing lithium glycerophosphate on the structure or into the structure.

3. Process for the treatment according to claim 2 and intended for the treatment of a structure composed of a cement based product, **characterised in that** it includes the following step:
- impregnating the structure with a composition containing lithium glycerophosphate.

4. Process according to claim 3, **characterised in that** the composition is an aqueous solution.

5. Process according to any one of claims 3 to 4, **characterised in that** the impregnation of the structure with the composition comprises the application to its surface.

6. Process according to any one of claims 3 to 5, **characterised in that** the amount of the lithium glycerophosphate applied is comprised between 0.003 and 3 moles per m².

7. Process according to any one of claims 3 to 6, **characterised in that** the composition is applied using a paint brush, a roller or a spraying device.

8. Process for the treatment according to claim 2 and intended for inhibiting the corrosion on the steel reinforcements of a structure that are exposed to open air, **characterised in that** it comprises the following step:
- covering the reinforcements by a coat of paint that contains lithium glycerophosphate.

9. Process according to claim 8, **characterised in that** the paint is a water based paint.

10. Process for the treatment according to claim 2 and intended for treating a cement based slurry destined for enclosing the steel reinforcements in order to realise a structure, **characterised in that** it comprises the following step:
- incorporating a composition that contains lithium glycerophosphate, into the not yet hardened cement based slurry product.

11. Process according to claim 10, **characterised in that** an amount of between 0.001% and 1% of lithium glycerophosphate is incorporated into the slurry.

12. Process according to one of claims 10 and 11, **characterised in that** the composition is an aqueous solution.

13. Cement based structure including steel reinforcements, obtained by the process according to any one of claims 2 to 12.

## Patentansprüche

1. Verwendung von Lithiumglycerophosphat bei der Behandlung von Strukturen, die ein Produkt auf Zementbasis und eine Bewehrung aus Stahl enthalten, als Mittel zur Verhinderung der Korrosion der Bewehrungen und der Beeinträchtigung des Produkts auf Grund von Reaktionen mit Alkalien und der Gegenwart von Alkalien und Sulfaten.

2. Verfahren zur Behandlung einer Struktur auf Zementbasis mit Bewehrungen aus Stahl zwecks Verhinderung der Korrosion der Bewehrungen und einer Beeinträchtigung auf Grund von Reaktionen mit Alkalien und der Gegenwart von Alkalien und Sulfaten in der Struktur, **dadurch gekennzeichnet, dass** es den folgenden Schritt aufweist:
- Aufbringen einer Zusammensetzung, welche Lithiumglycerophosphat enthält, auf die Struktur oder in die Struktur.

3. Verfahren zur Behandlung nach Anspruch 2 und für die Behandlung einer Struktur aus einem Produkt auf Zementbasis, **dadurch gekennzeichnet, dass** es den folgenden Schritt aufweist:
- Imprägnierung der Struktur mit einer Zusammensetzung, welche Lithiumglycerophosphat enthält.

4. Verfahren nach Anspruch 3, **dadurch gekennzeichnet, dass** die Zusammensetzung eine wässrige Lösung ist.

5. Verfahren nach einem der Ansprüche 3 und 4, **dadurch gekennzeichnet, dass** die Imprägnierung der Struktur mit der Zusammensetzung durch Aufbringen auf seine Oberfläche ausgeführt wird.

6. Verfahren nach einem der Ansprüche 3 bis 5, **dadurch gekennzeichnet, dass** die aufgebrachte Menge an Lithiumglycerophosphat zwischen 0,003 und 3 Mol/m² beträgt.

7. Verfahren nach einem der Ansprüche 3 bis 6, **dadurch gekennzeichnet, dass** die Zusammensetzung mit einem Pinsel, einer Rolle oder einer Sprühvorrichtung aufgebracht wird.

8. Verfahren zur Behandlung nach Anspruch 2 und zur Verhinderung einer Korrosion der Stahlbewehrungen einer Struktur, die der freien Luft ausgesetzt sind, **dadurch gekennzeichnet, dass** es den folgenden Schritt aufweist:
- Überziehen der Bewehrungen mit einem Anstrich, welcher Lithiumglycerophosphat enthält.

9. Verfahren nach Anspruch 8, **dadurch gekennzeichnet, dass** der Anstrich ein wässriger Anstrich ist.

10. Verfahren zur Behandlung nach Anspruch 2 und zum Behandeln eines Breis auf Zementbasis, der zum Einschliessen von Stahlbewehrungen zwecks Aufbau einer Struktur bestimmt ist, **dadurch gekennzeichnet, dass** es den folgenden Schritt aufweist:
- Zusatz einer Zusammensetzung, welche Lithiumglycerophosphat enthält, zum Brei auf Zementbasis vor seinem Aushärten.

11. Verfahren nach Anspruch 10, **dadurch gekennzeichnet, dass** man in den Brei zwischen 0,001% und 1% Lithiumglycerophosphat einarbeitet.

12. Verfahren nach einem der Ansprüche 10 und 11, **dadurch gekennzeichnet, dass** die Zusammensetzung eine wässrige Lösung ist.

13. Struktur auf Zementgrundlage mit Stahlbewehrungen, erhalten nach dem Verfahren gemäss einem der Ansprüche 2 bis 12.
